# EUROPEAN PATENT APPLICATION

(11) **EP 4 765 778 A1**
(43) Date of publication of application: **24.06.2026**
(21) Application number: 25222958.8
(22) Date of filing: 12.12.2025
(51) Int. Cl.: H04L 67/12, H04L 9/40, H04L 67/56

(54) **PROTECTIVE MANAGEMENT OF DATA TRANSFERS BETWEEN CONSUMERS OF LARGE DATA AND EDGE CONTROLLERS**

(30) Priority: 18.12.2024 US 202418986011
(71) Applicant: Schneider Electric Systems USA, Inc., Foxboro, MA 02035 (US)
(72) Inventor: AHMED, Sherif, Foxboro (US); RAMEIL, Marcel, Foxboro (US); PULLES, Harm, Foxboro (US)
(74) Representative: Openshaw & Co.

(57) **Abstract**

A method (200) performed by an interface server for safeguarding one or more edge controllers coupled to industrial equipment during data transfers is provided. The method (200) includes configuring (204) measures for data transfers between the external client and components of the one or more edge controllers, the one or more edge controllers and the industrial equipment being secured in a control zone established by an industrial network, the one or more external clients being external from the control zone. The method (200) further includes receiving (206) a request for transferring data between an external client of one or more external clients and a component of an edge controller of the one or more edge controllers, applying (208) the measures, and facilitating (210) transfer of the data requested in accordance with the applied measures.

## Description

### FIELD

This disclosure relates generally to data flow to and from an industrial system, and more particularly, to protective management of data transfers between consumers of large data and edge controllers of the industrial system.

### BACKGROUND

There is an increased demand for transfer of data from (reading) devices in the field or cabinet levels via industrial controllers to large data consumers at the enterprise level, such as cloud-based data lakes and/or data warehouses. Such industrial controllers that interface between devices at the field or cabinet levels (e.g., via an input/output (I/O) module) and servers at the enterprise level are referred to as edge devices. The transferred data can be used, for example, to enable data analytics in the cloud, facilitate data driven decisions, train machine learning models, etc. Such transfer of data can include transfer of very large amounts of data from edge controllers of distributed control systems, many of which are mission critical industrial controllers.

Open Platform Communications (OPC) Unified Architecture (UA) is a platform-independent, open-source, IEC62541 standard that enables the secure exchange of information in industrial systems. OPC UA enhances interoperability between edge controllers and enterprise-level software (e.g., for planning and automation) regardless of disparate technologies. OPC UA provides flexibility and scalability. OPC UA can be a tool to enable the transfer of large amounts of data from field devices via edge controllers to large data consumers.

One concern is overloading edge controllers. Edge controllers can receive data from devices in field and cabinet levels (e.g., sensors, actuators, alarms, programmable logic controllers (PLCs), and the like). Edge controllers can further provide control to the devices as well, such as for controlling processes (e.g., a production process). A particular concern is overloading an edge controller, as this can disrupt a process that it controls. The concern is particularly acute for edge controllers that control mission critical processes.

One problem to be solved is avoidance of overloading before distress occurs in order to avoid a resultant disruption to a process. Another problem to be solved is the ability to know when distress due to overloading has occurred as early as possible.

OPC UA may provide additional abilities for increased automation by transferring data to (writing) an edge controller, such as to provide automated control of an industrial process based on analytics performed by powerful computing cloud-based tools. However, the edge controller is vulnerable to data writes that can unintentionally or intentionally cause problems, such as misconfigurations of the edge controller.

It may be possible to provide certain protections for an edge controller of a particular industrial system that are customized for the edge controller and manually installed. This process is time consuming and requires expert skill of engineers that are experts in the particular industrial system that needs the protections.

While conventional methods and systems have generally been considered satisfactory for their intended purpose, there is still a need in the art for a simplified system and method to provide protection to an edge controller of an industrial system to avoid overloading the edge controller when transmitting data and to avoid problems that can arise from writing data to the edge controller, while still providing benefits enabled by the flexibility and scalability of OPC UA.

### SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings. To achieve these and other advantages and in accordance with the purpose of the illustrated embodiments, in one aspect, disclosed is a computer-implemented method performed by an interface server for safeguarding one or more edge controllers coupled to industrial equipment during data transfers. The method includes configuring measures for data transfers between the external client and components of the one or more edge controllers, receiving a request for transferring data between an external client of one or more external clients and a component of an edge controller of the one or more edge controllers, applying the measures, and facilitating transfer of the data requested in accordance with the applied measures. The one or more edge controllers and the industrial equipment are secured in a control zone established by an industrial network, and the one or more external clients are external from the control zone.

In one or more embodiments, the method can further include receiving user input and configuring the measures based on the user input.

In one or more embodiments, configuring the measures can include associating fast and slow designators with respective selected data points of a plurality of data points that reference the components of the one or more edge controllers, wherein when transferring data with a component of the one or more edge controllers referenced by a slow designator, the measures can be configured with a first configuration, and when transferring data with a component of the one or more edge controllers referenced by a data point having a fast designator, the measures can be configured with a second configuration that is different from the first configuration.

In one or more embodiments, the first configuration can cause transferring the data at a first rate based on a first time interval and the second configuration causes transferring the data at a second rate based on a second time interval that is shorter than the first time interval.

In one or more embodiments, configuring the measures can include associating a write-enabled designator with a set of data points of the plurality of data points, wherein the measures can be configured to allow the data to be transferred by a write operation from the external client to only the components of the one or more edge controllers referenced by the set of data points.

In one or more embodiments, the method can further include identifying potential or actual overloading conditions of an edge controller of the one or more edge controllers, wherein the measures can be applied to data transfers with components of the edge controller in response to identification of the potential and/or actual overloading conditions.

In one or more embodiments, the method can further include associating fast and slow designators with respective data points of a plurality of data points that reference the components of the one or more edge controllers and identifying potential or actual overloading conditions of an edge controller of the one or more edge controllers. When processing read requests to read the data from the components of the one or more edge controllers that are referenced by a data point associated with a slow designator, the measures can apply a first configuration for effectively dropping data requested to be read for one or more read/write cycles responsive to identification of the potential or actual overloading condition, and wherein when processing a request to read data from the components of the one or more edge controllers that are referenced by a data point associated with a fast designator, the measures can apply a second configuration that is different from the first configuration for potentially effectively dropping the data requested to be read responsive to identification of the potential or actual overloading condition.

In one or more embodiments, the first configuration can include gradually adjusting an amount of read requests from components of the one or more edge controllers referenced by a data point associated with a slow designator that are processed, wherein the amount can be a function of resolution of the potential or actual overloading condition.

In one or more embodiments, the second configuration can include refraining from effectively dropping the data requested to read from components of the one or more edge controllers that are referenced by a data point associated with a fast designator or effectively dropping a smaller amount of data requested at any point of time than is effectively dropped in connection with read requests from components of the one or more edge controllers referenced by a data point associated with a slow designator.

In one or more embodiments, functionality of the one or more edge controllers can be prioritized over performing the requested data transfer.

In one or more embodiments, a plurality of the one or more external clients can be subscribed to the same data point, each of the subscribed external clients being subscribed at a respective subscribed rate, upon which the method can include polling a component of the edge controller referenced by the data point only once at a selected subscribed rate on behalf of all of the subscribed external clients and transferring data obtained from a component of the one or more edge controllers referenced by the data point to the plurality of the external clients.

In one or more embodiments, the selected subscribed rate can be a fastest subscribed rate of the respective subscribed rates.

In accordance with another aspect of the disclosure, disclosed is a computer system for safeguarding one or more edge controllers coupled to industrial equipment during data transfers. The computer system includes a memory configured to store instructions and a processor disposed in communication with said memory. The processor upon execution of the instructions is configured to perform the disclosed method. The processor is thus configured to measure for data transfers between the external client and components of the one or more edge controllers, receive a request for transferring data between an external client of one or more external clients and a component of an edge controller of the one or more edge controllers, apply the measure, and facilitate transfer of the data requested in accordance with the applied measures. The one or more edge controllers and the industrial equipment are secured in a control zone established by an industrial network and the one or more external clients are external from the control zone

In one or more embodiments, configuring the measures can include associating fast and slow designators with respective selected data points of a plurality of data points that reference the components of the one or more edge controllers, wherein when transferring data with a component of the one or more edge controllers referenced by a slow designator, the measures can be configured with a first configuration, and when transferring data with a component of the one or more edge controllers referenced by a data point having a fast designator, the measures can be configured with a second configuration that is different from the first configuration.

In one or more embodiments, the first configuration can cause transferring the data at a first rate based on a first time interval and the second configuration can cause transferring the data at a second rate based on a second time interval that is shorter than the first time interval.

In one or more embodiments, configuring the measures can include associating a write-enabled designator with a set of data points of the plurality of data points, wherein the measures can be configured to allow the data to be transferred by a write operation from the external client to only the components of the one or more edge controllers referenced by the set of data points.

In one or more embodiments, the processor upon execution of the instructions can be further configured to identify potential or actual overloading conditions of an edge controller of the one or more edge controllers, wherein the measures can be applied to data transfers with components of the edge controller in response to identification of the potential and/or actual overloading conditions.

In one or more embodiments, the processor upon execution of the instructions can be further configured to associate fast and slow designators with respective data points of a plurality of data points that reference the components of the one or more edge controllers and identify potential or actual overloading conditions of an edge controller of the one or more edge controllers, wherein when processing read requests to read the data from the components of the one or more edge controllers that are referenced by a data point associated with a slow designator, the measures can apply a first configuration for effectively dropping data requested to be read for one or more read/write cycles responsive to identification of the potential or actual overloading condition, and when processing a request to read data from the components of the one or more edge controllers that are referenced by a data point associated with a fast designator, the measures can apply a second configuration that is different from the first configuration for potentially effectively dropping the data requested to be read responsive to identification of the potential or actual overloading condition, wherein the first configuration can include gradually adjusting an amount of read requests from components of the one or more edge controllers referenced by a data point associated with a slow designator that are processed and the amount is a function of resolution of the potential or actual overloading condition, and wherein the second configuration can include refraining from effectively dropping the data requested to read from components of the one or more edge controllers that are referenced by a data point associated with a fast designator or effectively dropping a smaller amount of data requested at any point of time than is effectively dropped in connection with read requests from components of the one or more edge controllers referenced by a data point associated with a slow designator.

In one or more embodiments, a plurality of the one or more external clients can be subscribed to the same data point, each of the subscribed external clients being subscribed at a respective subscribed rate, responsive to which the processor, upon execution of the instructions can be further configured to poll a component of the edge controller referenced by the data point only once at a selected subscribed rate on behalf of all of the subscribed external clients and transfer data obtained from a component of the one or more edge controllers referenced by the data point to the plurality of the external clients.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

A more detailed description of the disclosure, briefly summarized above, may be had by reference to various embodiments, some of which are illustrated in the appended drawings. While the appended drawings illustrate select embodiments of this disclosure, these drawings are not to be considered limiting of its scope, for the disclosure may admit to other equally effective embodiments.
FIG. 1A is a block diagram illustrating an industrial plant system having an interface server that facilitates communication between industrial equipment and multiple external clients, in accordance with embodiments of the disclosure;
FIG. 1B is block diagram of an interface server, in accordance with embodiments of the disclosure;
FIG. 2 is a flowchart of an example method of providing safeguards for one or more edge controllers during data transfers between industrial equipment and external clients, in accordance with embodiments of the disclosure;
FIG. 3 is a flowchart of an example method of processing a new client data transfer request from an external client, in accordance with embodiments of the disclosure;
FIG. 4 is a flowchart of an example method of providing overload protection to an edge controller while processing client read requests, in accordance with embodiments of the disclosure; and
FIG. 5 shows a block diagram of an exemplary computer system that could be used to implement at least portions of the interface server shown in FIGS. 1A and 1B, in accordance with embodiments of the disclosure.

Identical reference numerals have been used, where possible, to designate identical elements that are common to the figures. However, elements disclosed in one embodiment may be beneficially utilized on other embodiments without specific recitation.

### DETAILED DESCRIPTION

The present disclosure is directed to providing protection in an Open Platform Communications (OPC) Unified Architecture (UA) data server layer to enable throttling and optimization of data transfer volume when transferring data from (via read operations) or transferring data to (via write operations) an edge controller to the cloud to help prevent overloading the edge controller and to avoid disrupting a production process that is controlled by the edge controller. The present disclosure further provides protection in the OPC UA data server layer to enable automated write protection to the edge controller to prevent intentional or unintentional damage that can occur from writing to the edge controller by a cloud-based entity. The protections are user configurable via a user interface provided to an OPC UA data server in the OPC UA data server layer.

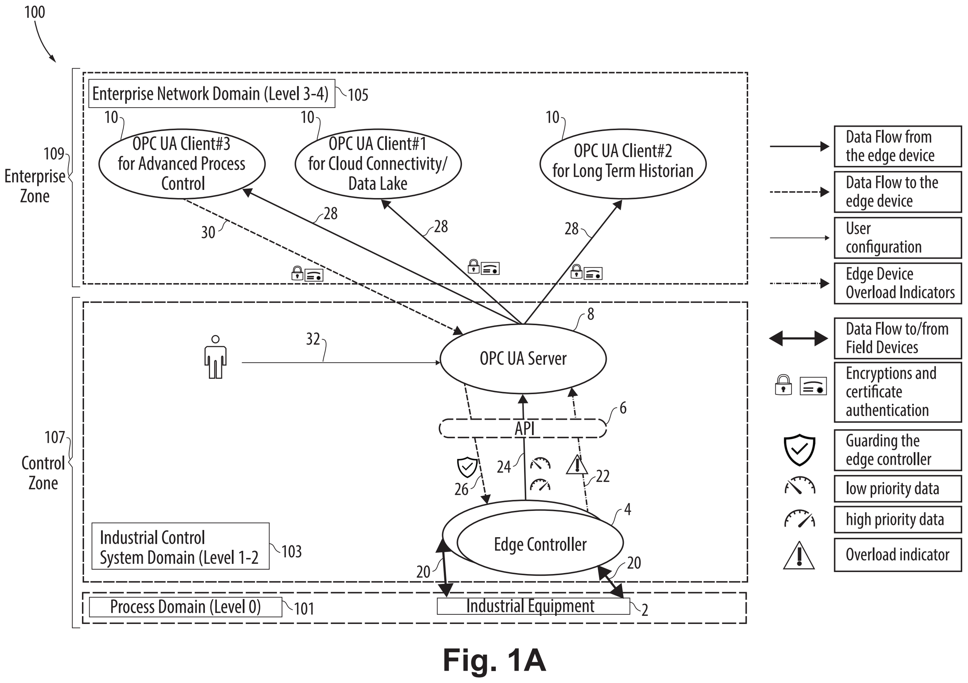

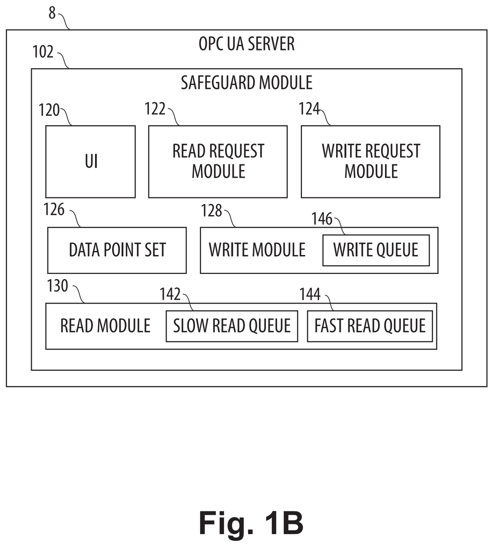

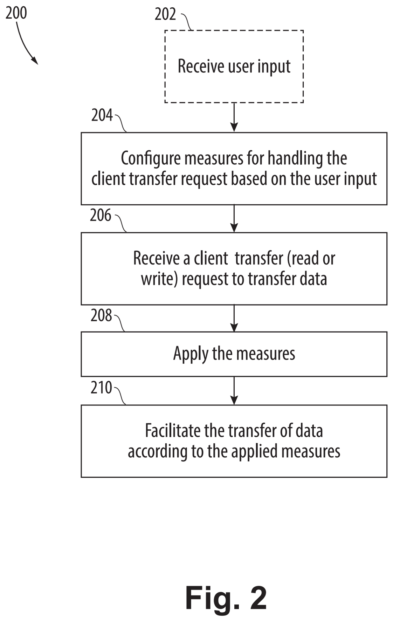

Reference will now be made to the drawings wherein like reference numerals identify similar structural features or aspects of the subject disclosure. For purposes of explanation and illustration, and not limitation, a block diagram of an exemplary embodiment of an industrial environment in accordance with the disclosure is shown in FIG. 1 and is designated generally by reference character 100. Other embodiments of the industrial system 100 in accordance with the disclosure, or aspects thereof, are provided in FIGS. 2-5, as will be described.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, exemplary methods and materials are now described.

It must be noted that as used herein and in the appended claims, the singular forms "a", "an" and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth. It is to be appreciated the embodiments of this disclosure as discussed below are implemented using a software algorithm, program, or code that can reside on a computer useable medium for enabling execution on a machine having a computer processor. The machine can include memory storage configured to provide output from execution of the computer algorithm or program.

As used herein, the term "software" is meant to be synonymous with any logic, code, or program that can be executed by a processor of a host computer, regardless of whether the implementation is in hardware, firmware or as a software computer product available on a memory storage device or for download from a remote machine. The embodiments described herein include such software to implement the equations, relationships, and algorithms described above. One skilled in the art will appreciate further features and advantages of the disclosure based on the above-described embodiments. Accordingly, the disclosure is not to be limited by what has been particularly shown and described, except as indicated by the appended claims.

In instances where examples are provided, the examples are not intended to be limiting or limited to the particular examples provided.

FIG. 1A is a system flow diagram that shows an example architecture of example industrial system 100. Within industrial system 100 are a process domain 101 (also referred to as level 0 in various models of a representative industrial control system (ICS)), an industrial control system domain 103 (also referred to as levels 1-2 in the various models of the ICS), and an enterprise network domain 105 (also referred to as levels 3-4 in the various models of the ICS). Process domain 101 and industrial control system domain 103 are included in control zone 107, whereas enterprise network domain 105 is included in an enterprise zone 109. Control zone 107 is considered to be integral to the core architecture of the industrial control system and requires a high level of security. Communication with any elements external to control zone 107 is highly secured. Enterprise zone 109 is considered to be external to the core architecture of the industrial control system.

Process domain 101 includes industrial equipment 2. Industrial equipment 2 can be either wired with direct electrical connectivity or networked with some form of networked connectivity. This disclosure applies to any type of connected industrial equipment.

The industrial equipment 2 can include electrical or electronic equipment, for example at the field or cabinet level, such as machinery associated with the industrial system 100 (e.g., a manufacturing or natural resource extraction operation), which may also include controllers and/or ancillary equipment associated with industrial system 100, for example, remote terminal units (RTUs), programmable logic controllers (PLCs), programmable automation controllers (PACs), actuators, sensors (e.g., temperature sensors, pressure sensors, flow sensors, level sensors, vibration sensors), human machine interfaces (HMIs), alarms, and communication infrastructure (e.g., input/output (I/O) modules, slice I/O, fieldbus modules).

The industrial equipment 2 may be installed or located in one or more facilities (i.e., buildings) or other physical locations (i.e., sites) associated with industrial system 100. The facilities may correspond, for example, to industrial buildings, plants, or resource extraction sites. Additionally, the physical locations may correspond, for example, to geographical areas or locations. Industrial system 100 can be associated with one or more applications or processes that can be continuous or discontinuous (e.g., recipe based). The applications or processes can involve, for example and without limitation, energy consumption, energy generation, processing of raw material, and production of finished goods. The raw materials and finished goods can be liquid, gas, or of solid structure.

Industrial control system domain 103 includes one or more edge controllers 4, an application programming interface (API) 6, and an OPC UA server 8. Edge controller(s) 4 are industrial controllers that communicate with industrial equipment 2 and OPC UA server 8 for providing control to industrial equipment 2, receiving data from industrial equipment 2, and transferring data between industrial equipment 2 and OPC UA server 8. Communication between edge controllers(s) 4 and OPC UA server 8 (as shown by interfaces 22, 24, and 26, with the arrows showing the direction in which data flows is implemented within control zone 107. In certain embodiments, communication within control zone 107 can be wired and/or can accommodate operational technology (OT) and associated security measures. In certain embodiments, communication within control zone 107 can be wireless and/or nonsecure.

Edge controller(s) 4 are configured with control blocks that have multiple elements including inputs, functions, and outputs. The functions can operate, for example, on the input or output of other functions. The inputs can include process variable that originate from components of industrial equipment 2, such as sensors or aggregators. The outputs can include process variable measurements provided to components of the industrial equipment 2, such as thresholds and/or control signals provided to actuators sensors, alarms, etc., The functions can include process variable measurements, such as constants, values to apply to function variables. For example, a process variable measurement can be applied to determine a threshold used, an order of process steps performed, a factor to be applied for increasing or decreasing a variable, etc. Certain process variable measurements can be configurable and can affect how the functions are applied. The process variable measurements included with each control block can be referenced by a tag that is used in external communications with OPC UA clients 10 for reading and/or writing.

In one or more embodiments, API 6 can facilitate the transfer of data between edge controller(s) 4 and OPC UA server 8. API 6 thus provides for interoperability of edge controller(s) 4 and OPC UA server 8. API 6 handles real-time communications within edge controller(s) 4 in a namespace of the industrial system 100. In this way, OPC UA server 8 can be integrated seamlessly into an existing run-time environment of industrial system 100, including edge controller(s) 4 and industrial equipment 2, and can have the ability to participate in real-time communication within industrial system 100. All or portions of API 6 can be integrated with OPC UA server 8 and/or the edge controller(s) 4. API 6 is configured to provide integration of data, functions, and capabilities between applications used by edge controller(s) 4 and OPC UA server 8. In effect, edge controller(s) 4 communicate via OPC UA server 8 (or an equivalent interface server) with OPC UA clients 10 that can be outside of control zone 107, such as cloud-based clients and/or clients in enterprise network domain 105. In an example embodiment, API 6 can be implemented using a proprietary object manager developed by Schneider Electric USA, Inc., of Foxborough Massachusetts.

OPC UA server 8 is user-configurable for safeguarding edge controller(s) 4 during data transfers from edge controller(s) 4 to OPC UA clients 10 and data transfers from OPC UA clients 10 to edge controller(s) 4. The safeguards apply measures that can be based on user configurable designators that a user can adjust, e.g., via a user interface (UI) (see UI 120 shown in FIG. 1B).

In one or more embodiments, OPC UA server 8 applies at least some of the safeguard measures at all times. In one or more embodiments, OPC UA server 8 applies some or all of the safeguard measures responsive to detection of indicators of overloading or potential overloading of the edge controller(s) 4. Overloading or potential overloading can be detected by signals sent from edge controllers 4 themselves and/or based on analytics performed by OPC UA server 8 or OPC UA clients 10.

In one or more embodiments, the safeguard measures can cause differentiated handling of read instructions, depending on whether the read instructions are based on client read requests for slow data points or fast data points. Slow data points are data points associated with data point entries having slow designators (which can include not having a fast designator). Data point entries for fast data points have fast designators (which can include not having a slow designator). In certain embodiments, the fast and/or slow designators can indicate different levels of speed.

Additionally or alternatively, the safeguard measures can include throttling requests for reading data from edge controller(s) 4. The throttling can include delaying transfer of or dropping data that was requested to be transferred by dropping read requests at their scheduled times, and potentially saving the read requests for later processing. Later, processing can be performed once the overload condition has cleared. The dropping of read requests can be for one or more read/write cycles. Client read requests for data from slow data points can be treated as lower priority than client read requests for data from higher priority data points. Implementation of dropping lower priority client read requests can precede implementation of dropping higher priority client read requests. In this way, higher priority client read requests can be dropped only if dropping lower priority client read requests did not sufficiently cure (e.g., as determined based on a user configurable metric) an actual or potential overload condition of edge controller(s) 4 that is developing or for which there are indications is likely to develop.

It is noted that methods for throttling write requests handled by an edge controller in response to overload conditions can be applied that are similar to the methods for throttling read requests handled by the edge controller.

Accordingly, interface 24 can be used to transmit high and/or low priority data that corresponds to data point entries having respective fast and slow designators. Handling of client read requests by OPC UA server 8 for reading data can be differentiated depending on whether the read requests are for high or low priority data and/or in view of corresponding fast and slow designators. The differentiated handling of high and low priority data can reduce a load on edge controller(s) 4 and bandwidth used between edge controller(s) 4 and industrial equipment 2 (e.g., using equipment interface 20) by avoiding treatment of all data transfers as having high priority.

Safeguards applied during data transfers from edge controller(s) 4 to OPC UA clients 10) reduce or minimize a risk of these data transfers negatively impacting any of edge controller(s) 4, such as overwhelming an edge controller 4 and/or its interface with industrial equipment 2 or degrading performance of the edge controller 4. Safeguards for applied during data transfers from OPC UP clients 4 to edge controller(s) 2 increase security of writing data to edge controller(s) 4, such as to reduce or minimize a risk of intentional or unintentional misconfigurations of edge controller(s) 4. A misconfiguration of an edge controller 4 could cause unexpected and/or unwanted behavior by the edge controller 4.

Edge controller(s) 4 include hardware, software, and firmware for facilitating their disclosed functionality. In one or more embodiments, edge controller(s) 4 can be included in a distributed control system (DCS) in some instances that is configured to control and operate industrial equipment 2. Control blocks of the edge controller(s) 4 are part of an application that runs on the edge controller's software, and the edge controller's software is based on the edge controller's firmware and application additions and parametrization. Edge controller(s) 4 are coupled to industrial equipment 2 and use OT technologies to control and operate industrial equipment 2 and can be connected to further IT technologies, such as to provide mobility, cloud, and analytics capabilities. Edge controller(s) operate within control zone 107 established for industrial equipment 2, such as for executing one or more control processes associated with one or more data points.

An example edge controller 4 is a Field Control Processor FCP280 or Field Device Controller FDC280, both being part of the EcoStruxure Foxboro^{™} DCS produced by Schneider Electric USA, Inc., of Andover Massachusetts.

The example edge controller 4 can be an industrial internet of things (IIoT) edge controller that operates with automated industrial equipment 2 to exchange data for acquiring data from and providing control to industrial equipment 2 (as indicated by equipment interfaces 20). The edge controller 4 and industrial equipment 2 can operate autonomously to perform such data exchanges. Human intervention can be used in varying amounts, including none, or for providing supervision or permission to proceed.

OPC UA server 8 includes hardware, software, and/or firmware for facilitating its disclosed functionality. OPC UA server 8 is an interface server that facilitates data transfers between external clients, such as OPC UA clients 10 and industrial equipment 10 by providing a standardized interface for data transfers. In the example provided, the OPC UA technology is used to establish the standardized interface. OPC UA server 8 communicates with one or more OPC UA clients 10 as well as with edge controller(s) 4 via API 6 and safeguards applied during data transfers between OPC UA clients 10 and edge controller(s) 4 in accordance with user-configurable designators.

OPC UA clients 10 include hardware, software, and/or firmware for communicating with OPC UA server 8, such as by using a client/server or subscribe/publish protocol. OPC UA clients 10 are external clients, meaning they are external to control zone 107 and couple to OPC UA server 8 using wired or wireless Ethernet connectivity

OPC UA clients 10 can be systems that request data from edge controller 4 via OPC UA server 8, receive data in response to the request, store and/or analyze the data, communicate with other OPC UA clients 10, and/or generate data to be written to a data point by edge controller 4 (e.g., based on a result of analysis performed or otherwise obtained). OPC UA clients 10 can be, for example, cloud-based or on-premises and/or virtually installed or physically installed. The data to be written to the data point can be control data that can affect a control block of a controller of industrial equipment 2, such as by providing control of an actuator (e.g., a valve or motor) via the control block, changing a parameter of the control block, etc. OPC UA clients 10 can be large consumers of data, such as data lakes and/or data warehouses, repositories for training data to be used for training machine learning algorithms, etc.

With additional reference to FIG. 1B, a block diagram of OPC UA server 8 is provided, showing components of OPC UA server 8, including a safeguard module 102 that is configured to facilitate the disclosed functionality of OPC UA server 8. Safeguard module 102 includes user interface (UI) 120, a read request module 122 for providing safeguards for reading data from edge controller(s) 4 by OPC UA clients 10, a write request module 124 for providing safeguards for writing data from OPC UA clients to edge controller(s) 4, a data point set 126, a read module 130, and a write module 128. UI 120, read request module 122, write request module 124, data point set 126, read module 130, and write module 128 include software and hardware for facilitating their disclosed functionalities. UI 120, read request module 122, and write request module 124, data point set 126, read module 130, and write module 128 can share all or portion of their software and/or hardware.

Interfaces 28 and 30, which are used for communication between OPC UA clients 10 and OPC UA server 8, extend beyond control zone 107. Security can be provided via security mechanisms, such as encryptions and certificate-based authentications.

UI 120 includes software and hardware configured to receive (as shown by data flow 32) user configuration requests for configuring data point entries in data point set 126. The user configuration requests can include, for respective edge controllers 4, designators that are associated with selected data point entries of data point set 126. The designators can include fast, slow, or write-enabled. Whenever a user changes a fast/slow or write-enable designation of a data point, the change can be logged, e.g., to a logs window that a user can consult.

Data point entries designated as write-enabled can be added to a write-enabled list in data point set 126. The user can separately configure designators and specific writable process variable measurements for edge controller(s) 4, allowing customized configuration of edge controller(s) 4. Configuration of the specific process variable measurements can overload thresholds per edge controller 4 in order to individually protect the respective edge controller(s) 4 based on its dynamic and static application load or other performance defining circumstances.

The user can enter the user configuration requests via a graphical user interface (GUI) presented to the user on a connected computing device (e.g., a handheld device, a laptop or desktop device or any other connected device). The GUI can be configured for data points to be selected via a menu or the like and data to be transferred to be user entered or selected by browsing or selecting via a menu or the like.

Data point set 126 can be integrated with or accessible by OPC UA server 8 and includes a set of datapoint entries that store data points. The data points can reference external hardware elements of industrial equipment 2 or control block elements that are potential sources or targets of data that can be transferred between edge controller(s) 4 and OPC UA client(s) 10 via OPC UA server 8 and API 6 in response to read or write requests from OPC UA client(s) 10.

A tag is actually a unique address in the namespace for an edge controller 4 that is used by API 6 to provide a relationship to the edge controller 4 at runtime. The tags used by API 6 correspond to respective data points stored in a data point entry of data point set 126. At runtime, the tags are used by API 6 to enable access by OPC UA server 8 to a component of edge controller 4 referenced by the tags. Components of edge controller(s) 4 include control blocks and their components and industrial equipment and their components. Components of control blocks include input, functions, output, process variable measurements. Components of industrial equipment can include physical or software parts or modules. In this way, OPC UA server 8 can read from or write to a control block component, process variable measurement, field device, etc. using a tag. The terms "data point" and "tag" can be used interchangeably in various contexts since corresponding data points and tags reference the same edge controller component and can work in tandem.

Designators that are applied when reading data (also referred to as read designators) include fast and slow. Designators that are used for writing data (also referred to as write designators) include write-enabled.

In one or more embodiments, data point set 126 is based on a namespace used by OPC UA server 8, and data point entries correspond to names in the namespace.

Some data points correspond to only potential or actual sources from which data is read, and some data points correspond to only potential or actual targets to which data is written, and some data points correspond to both potential or actual sources and targets. Some examples of readable data points correspond to control block input that can be fetched via interfaces 20, e.g., from field or cabinet-level sensors or aggregators (e.g., PLCs) that aggregate data from sensors or correspond to process variable measurements of the control block. Some examples of writeable data points correspond to process variable measurements of a control block that that can affect one or more functions of the control block or correspond to control block output, such as control signals, that can be output via interfaces 20 to field devices or cabinet-level controllers (e.g., PLCs, actuators, alarms, sensors).

References to containers, control blocks, and data points of edge controller(s) 4 can be organized hierarchically in data point set 126, e.g., from high to low. For example, high level elements of the hierarchy can reference containers. A next lower level of elements can branch from the container and reference one or more control blocks. A next lower level can branch from a control block and reference one or more data points. The control blocks can each have an associated control block type. The data points can each have an associated data point type and an associated designator.

Users can assign designators to be associated with data points. The user can assign a read designator (fast or slow) to the data points individually. In certain embodiments, the user can assign a read designator to multiple data points by specifying a control block type and/or a data point type. Each data point having the control block type and/or data point type specified is assigned the read designator, which allows many data points to be assigned a read designator via a single user request.

In certain embodiments, a slow designation can have multiple levels. For example, the levels can have different increments of a time interval (e.g., wherein the interval is a minute, an hour, a day, etc.). For example, a data point having a read designator that is fast can be read in real time without any added delay. A data point can have a read designator that is slow and causes a delay of a specified number of hours (e.g., 1, 12, or 24) following a read request until the data to be read is read by the edge controller 4.

The user can assign a write designator (write enabled) to individual data points. Although assignment of write designators to multiple data points is technically possible, assignment of designators can be restricted to assignment to individual data points, such as for security purposes. UI 120 can provide, for example, drop down menus via which a user can assign designators to individual data points.

In certain embodiments, users can specify assignment of read and/or write designators using a table, such as a spreadsheet and import the table via UI 120. The designators will be applied based on table.

Slow data points can be used to reference static control block elements that rarely change, e.g., configuration parameters (which may only change value when they are reconfigured), descriptions, alarm limits, measurement units, etc. Fast data points can be used to reference dynamic control block elements. Some examples of dynamic control block elements include actuator output, sensor measurement input, etc.

API 6 uses a list of tags (referred to as an API list) that correspond to data points. Fast data points can remain on the API list, whereas slow data points can be added to the list of API tags when needed and removed, since they may be accessed only rarely. For example, tags for slow data points that are static can be updated at a slow rate, e.g., every few hours. In certain embodiments, the slow designator can indicate a particular slow rate from two or more available slow rates. This can optimize utilization of available capacity of the API list and reduce the need to transfer tags on or off the API list.

In one or more embodiments, when a data point entry does not have a designator for its role(s) of being a potential source and/or potential target, a default designator can be assigned. The default designator can be user configured.

Read request module 122 is configured to process client read requests from OPC UA clients 10 for reading data transfers from edge controller(s) 4 to the OPC UA clients 10 (meaning to the same OPC client 10 that submitted the client read request or to a different OPC UA client 10). Each client read request can identify a data point that is a source of data requested to be read and transferred to an OPC UA client 10. Additionally, the client read requests can request that the data transfer occur repeatedly, so that the identified data point is sampled and transferred for updating the sampled data being transferred on an ongoing basis, e.g., by using a subscription

In one or more embodiments, processing the client read request can include determining whether the requested data transfer needs to be modified as a safeguard to avoid, prevent, reduce, or minimize a compromising effect on any of edge controllers 4. This determination can be based on factors, such as whether an edge controller 4 is approaching an overloaded state or has reached an overloaded state.

An overloaded state of an edge controller can occur, for example, when the edge controller has exceeded its capacity. This can occur due to a difference in capacity of OPC UA server 8 and/or UPC UA clients 10 relative to the capacity of edge controller 4. OPC UA clients 10, as potentially consumers of large amounts of data, can send client read requests for large amounts data. While OPC UA server 8 may have the resources to handle the large number of requests and data, the edge controller(s) 4 have limited resources and are at risk of being overloaded. Therefore, OPC UA server 8's safeguard module 102 is configured to automatically safeguard edge controller(s) from becoming overloaded. Safeguard module 102 can be easily configured by a user via UI 120 to implement, customize, and/or adjust the safeguarding features provided by safeguard module 102.

The determination about whether the edge controller 4 is approaching or has reached an overloaded state can be based on analytics performed by OPC UA server 8 and/or from alerts received from edge controller 4 (e.g., via interface 22 in FIG. 1A). For example, OPC UA server 8 can detect edge controller overload indicators (e.g., sent via interface 22) and raise an alarm. For example, an alarm can be raised when data (or client read requests) are dropped (e.g., delayed for future processing or dropped completely) because of overload of any of edge controller(s) 4. Additionally, OPC UA server 8 can throttle data transfer as needed to reduce the load of the edge controller 4.

Additionally or alternatively, processing the client read request can include determining whether the data point entry for the data point identified in the client read request has a designator (e.g., by consulting data point set 126), and if so, whether the designator is fast or slow. Read request module 122 can cause different treatment to be applied when transferring the requested data based on whether the data point entry corresponding to the identified data points are designated as fast or slow. In certain embodiments, the different treatment can be applied during normal operation. In certain embodiments, the different treatment can be applied only when a condition is detected, such as a determination that any of edge controller(s) 4 is approaching or has reached an overloaded state.

In an example method of providing different treatment based on whether the data is transferred from a slow or fast data point, when the data point entry for the identified data point is designated as slow, read request module 122 adds a read instruction to a slow read queue 142 of read module 130 for reading the data to be transferred from the edge controller component referenced by the identified data point. When the data point entry for the identified data point is fast, read request module 122 adds a read instruction to a fast read queue 144 of read module 130 for reading the data to be transferred from the edge controller component referenced by identified data point.

Read module 130 processes the read instructions from the slow read queue 142 based on a user configurable long time interval, e.g., four - forty eight hours, with a default value being four hours. Read module 130 is configured to process the read instructions from the fast read queue 144 based on a user configurable short time interval, e.g., one second to 120 minutes, with a default value being two minutes. In this way, the amount of data transferred via a read request data transmission can be reduced by transferring data from slow data points at longer intervals than for fast data points.

Additionally, modifications to handling of client read requests can be based on whether the OPC UA client 10 subscribes to the identified data point and/or whether a different OPC UA client 10 subscribes to the identified data point. For example, when multiple OPC UA clients 10 are subscribed to the same data point (e.g., the identified data point) at respective subscribed rates that can be different, read module 130 can poll the data point only once at a selected subscribed rate. The selected subscribed rate can be the fastest rate of the respective subscribed rates. By only polling the data point once for all subscribed OPC UA clients 10, the subscribed OPC UA clients 10 (in some embodiments, all of the subscribed OPC UA clients 10) can be served without any additional polling of the data point. Data can be read via edge controller 4 only once and shared with multiple OPC UA clients 10, thus reducing load on edge controller 4.

In an example implementation, use of the API's 6 resources is optimized by using a tag on the API list only one time when handling multiple read or write requests from different OPC UA clients 10, regardless of whether they have similar or different subscription rates. Additionally, OPC UA server 8 can consolidate read requests from multiple OPC UA clients 10 for the same tag and read the data referenced by the tag only once, followed by sharing the read data with each of the requesting OPC UA clients 10.

When it is determined that any of edge controllers 4 is approaching or has reached an overloaded state, a determination whether or not to read data can depend on whether the data point entry for the identified data point is designated as slow or fast. When overloading is in a severe state, e.g., long term or permanent, client read requests for transferring data from data points having data point entries designated as slow that were not processed to completion (effectively dropping data)), can be processed to completion once a designated overload survival period is detected. The overload survival period can include a time period in which the overload condition is satisfactorily resolved in accordance with configurable criteria) be user configured and is likely to be longer than a slow read period.

Write request module 124 is configured to process client write requests from OPC UA clients 10 to write data to target data points. Each client write request identifies the target data point and includes the data to be transferred to edge controller and written to a control block element or external hardware elements of industrial equipment 2 that is referenced by the identified data point. Processing the client write request can include determining whether the data point entry for a data point identified in the client write request is in the write-enabled list of data point set 126. Only if it is determined that the client write request is for writing to a data point having a data point entry that is write-enabled, write request module 124 adds a write instruction to a write queue 146 of write module 128 for writing the data to be written to the identified data point. In this way, all write instructions in write queue 146 are verified. Write module 128 is configured to perform the actual write operation by processing the write instructions from write queue 146. Edge controller(s) 4 are thus guarded since interface 26 shown in FIG. 1A only includes write instructions that were verified. Additionally, verification of the write instructions can assist in avoiding overloading of edge controller(s) 4.

With reference now to FIGS. 2-4, shown are flowcharts demonstrating implementation of the various exemplary embodiments. The flowcharts in FIGS 2-4 are performed by a safeguard model of an interface server, such as safeguard module 102 of OPC UA server 8 (or an equivalent interface server) shown in FIG. 1B. It is noted that the order of operations shown in FIGS. 2-4 is not required, so in principle, the various operations may be performed out of the illustrated order. Also, certain operations may be skipped, different operations may be added or substituted, some operations may be performed in parallel instead of strictly sequentially, or selected operations or groups of operations may be performed in a separate application following the embodiments described herein.

With reference to FIG. 2, an example method 200 is shown for providing safeguards for one or more edge controllers (such as edge controller(s) 10 shown in FIG. 1) during data transfers. The one or more edge controllers are coupled to industrial equipment (such as industrial equipment 2 shown in FIG. 1). The one or more edge controllers and the industrial equipment are secured in a safety control zone (such as control zone 107, shown in FIG. 1) established by an industrial network. The one or more external clients are external from the safety control zone.

The method begins at block 202. Block 202, shown in dotted lines, is performed in certain embodiments. At block 202, user input is received. The user input is used to configure how various measures are applied for transferring the data.

At block 204, the measures are configured for data transfers between the external client and components of the one or more edge controllers. In certain embodiments, configuration of the measures is based on the user input. The measures can be configured to reduce a risk of unauthorized access to data points or tags referencing the edge controller or of overloading the edge controller.

At block 206, a client transfer request is received that requests a transfer of data between an external client of one or more external clients (such as OPC UA clients 10 shown in FIG. 1) and an edge controller of the one or more edge. The client transfer request can identify a data point of a plurality of data points that reference the edge controller and/or the industrial equipment with which data is requested to be transferred.

At block 208, a request is received for transferring data between an external client of one or more external clients and a component of an edge controller of the one or more edge controllers.

At block 208, the measures are applied. At block 210, the transfer of the data requested to be transferred is facilitated in accordance with the applied measures.

In one or more embodiments, configuring the measures can include associating fast and slow designators with respective selected data points of a plurality of data points that reference the components of the one or more edge controllers. When transferring data with a component of the one or more edge controllers referenced by a slow designator, the measures are configured with a first configuration, and when transferring data with a component of the one or more edge controllers referenced by a data point having a fast designator, the measures are configured with a second configuration that is different from the first configuration.

In one or more embodiments, the first configuration can cause transferring the data at a first rate based on a first time interval (e.g., instantly), and the second configuration can cause transferring the data at a second rate based on a second time interval that is longer than the first time interval.

In one or more embodiments, configuring the measures includes associating a write-enabled designator with a set of data points of the plurality of data points. The measures are configured to allow the data to be written from the external client to only components of the edge controller referenced by the set of data points.

In one or more embodiments, the method can further include identifying potential or actual overloading conditions of the edge controller, wherein the measures can be applied in response to identification of the potential and/or actual overloading conditions.

In one or more embodiments, the method can further include identifying potential or actual overloading conditions of an edge controller of the one or more edge controllers. The measures are applied to data transfers with components of the edge controller in response to identification of the potential and/or actual overloading conditions.

In one or more embodiments, the method can further include associating fast and slow designators with respective data points of a plurality of data points that reference the components of the one or more edge controllers. Potential or actual overloading conditions of an edge controller are identified. When processing read requests to read the data from the components of the one or more edge controllers that are referenced by a data point associated with a slow designator, the measures apply a first configuration for effectively dropping data requested to be read for one or more read/write cycles responsive to identification of the potential or actual overloading condition. When processing a request to read data from the components of the one or more edge controllers that are referenced by a data point associated with a fast designator, the measures apply a second configuration that is different from the first configuration for potentially effectively dropping the data requested to be read responsive to identification of the potential or actual overloading condition.

In certain embodiments, the first configuration includes gradually adjusting an amount of read requests from components of the one or more edge controllers referenced by a data point associated with a slow designator that are processed, wherein the amount is a function of resolution of the potential or actual overloading condition.

In certain embodiments, the second configuration includes refraining from effectively dropping the data requested to read from components of the one or more edge controllers that are referenced by a data point associated with a fast designator or effectively dropping a smaller amount of data requested at any point of time than is effectively dropped in connection with read requests from components of the one or more edge controllers referenced by a data point associated with a slow designator.

In one or more embodiments, functionality of the one or more edge controllers is prioritized over performing the requested data transfer.

In one or more embodiments, a plurality of external clients can be subscribed to the same data point, with each of the subscribed external clients being subscribed at a respective subscribed rate. The method can include polling the data point only once at a selected subscribed rate and transferring data from the data point to the plurality of the external clients.

In certain embodiments, functionality of the one or more edge controllers is prioritized over performing the requested data transfer.

In certain embodiments, a plurality of the one or more external clients are subscribed to the same data point, each of the subscribed external clients being subscribed at a respective subscribed rate, upon which the method includes polling a component of the edge controller referenced by the data point only once at a selected subscribed rate on behalf of all of the subscribed external clients and transferring data obtained from a component of the one or more edge controllers referenced by the data point to the plurality of the external clients.

In one or more embodiments, the selected subscribed rate can be a fastest subscribed rate of the respective subscribed rates.

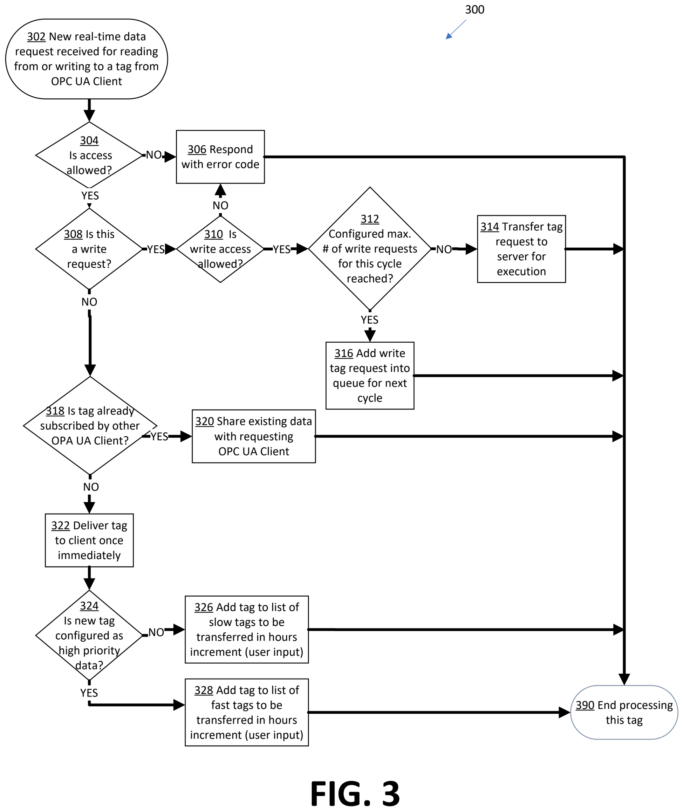

With reference to FIG. 3, an example method 300 of processing a new client data transfer request (e.g., a client read or write request) from an OPC UA client (such as OPC UA client 10 shown in FIG. 1A) is shown. The method begins at block 302, at which a new client read request or client write request is received from an OPC UA client. The request can be to read data from or write data to a tag. The tag corresponds to a data point. Both the tag and the data point reference a component of one or more edge controllers, such as edge controller(s) 4 shown in FIG. 1. The tag is used by an API (such as API 6 shown in FIG. 1) for referencing the component in real time.

At block 304, a determination is made whether access is allowed by the requesting OPC UA client. Block 304 can be an authentication and/or authorization determination step.

Block 306 is performed if the determination at block 304 is that access is not allowed. At block 306, a response is provided indicating that an error has occurred, e.g., with an error code.

At block 308, a determination is made whether the request received at block 302 is a client write request. Block 310 is performed if the determination at block 308 is that the received request is a client write request. At block 310, at determination is made whether a tag identified by the client write request has a corresponding data point entry (e.g., in a data point set 126 shown in FIG. 1B, which, in certain embodiments, can be a namespace) that is designated as write-access enabled. This determination can be performed, for example, by determining whether a data point entry for the tag is included in the write-enabled list, such as the write-enabled list provided in data point set 126 shown in FIG. 1B.

Block 312 is performed if the determination at block 310 is that the data point entry for the tag identified by the client write request is write-access enabled. At block 312, a determination is made wither a user-configurable maximum number of client write requests has been already received for the current cycle.

Block 314 is performed if the determination at block 312 is that the maximum number of client write requests has not yet been reached. At block 314, a write instruction for performing the requested client write is transferred for execution to a server or module that writes data to components of an edge controller referenced by the tag (e.g., write module 128), after which processing of the client request ends at block 390. Block 316 is performed if the determination at block 312 is that the maximum number of client write requests has already been reached. At block 316, a write instruction for performing the requested client write is added to a write queue (e.g., write queue 146) in order to be processed by the write module at a subsequent (e.g., next or later) read/write cycle, after which processing of the client request ends at block 390.

Block 318 is performed if the determination at block 308 is that the request is not a client write request, indicating that the request is a client read request. At block 318, a determination is made whether the tag identified in the client read request is already subscribed by another OPC UA client. Block 320 is performed if the determination at block 318 is that the identified tag is subscribed to by another OPC UA client. At block 320 a consolidated read request for all requesting OPC UA clients is constructed. In future execution cycles of the read module (e.g., read module 130, only one consolidated read request is executed for reading from the edge controller. After this consolidation in the read queue has been completed, processing of the client request ends at block 390. Block 322 is performed if the determination at block 318 is that the identified tag (or corresponding data point) is not subscribed to by another OPC UA client. In this case the data is retrieved and transferred from the component of the edge controller referenced by the requested tag.

At block 324, a determination is made whether the data point entry for the identified tag has an associated slow (for low priority) or fast (for high priority) designator. Block 326 is performed if the determination at block 324 is that the data point entry for the identified tag has an associated slow designator. At block 326, the tag is added to a slow list, after which processing of the client request ends at block 390. At block 328, the tag is added to a fast list, after which processing of the client request ends at block 390. A read module (such as read module 130 shown in FIG. 2) is configured to process read requests for the tag on the fast list at shorter intervals and the slow list at longer intervals for reading from the component of the edge controller referenced by the tag and transferring the data read to the requesting OPC UA client.

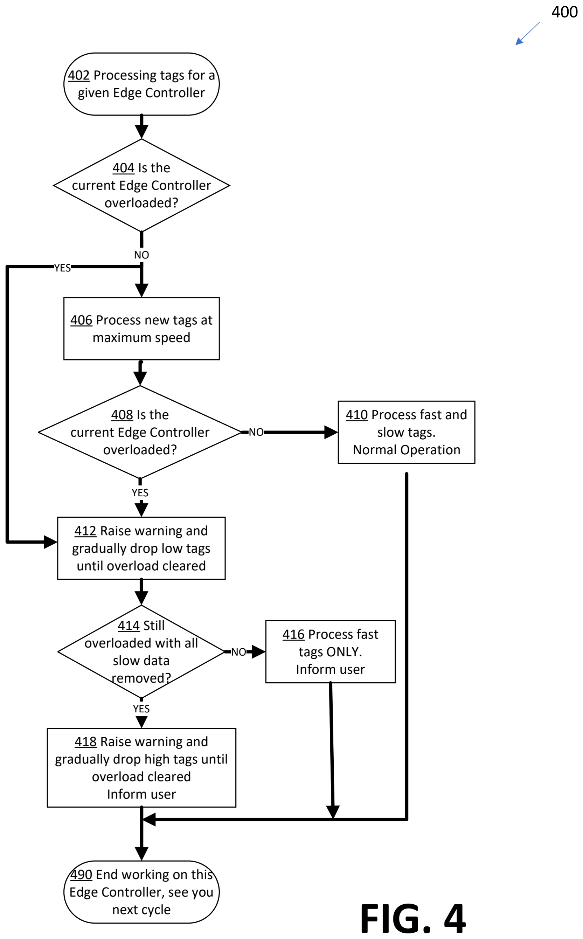

With reference to FIG. 4, an example method 400 of providing overload protection to an edge controller (such as one of edge controllers 4 shown in FIG. 1A) while processing client read requests from one or more OPC UA clients (such as OPC UA clients 10 shown in FIG. 1A) directed to the edge controller is shown. The method begins at block 402, in which client read requests from OPC UA clients are processed. The method can be continuously repeated each cycle as client read requests are processed.

At block 404, a determination is made whether an edge controller to which a client read request is directed (also referred to as the current edge controller) is overloaded. Block 406 is performed if the determination at block 404 is that the current edge controller is not overloaded. At block 406, the client read requests are processed at a maximum speed, regardless of whether entries in a data point set (such as data point set 126 (e.g., which corresponds to a namespace) corresponding to a tag identified in the client read requests are designated as fast or slow (also referred to as fast and slow tags, respectively). Accordingly, when the edge controller targeted by the client read request is not overloaded, the data point set does not need to be consulted to determine a designation associated with a data point entry for the identified tag. The method ends at block 490 for the current cycle and is repeated the next cycle.

The method continues at block 408, at which a determination is made again whether the current edge controller is now overloaded. It is noted that block 404 checks for overloading before processing any tags in the current cycle, whereas block 408 checks for overloading again after processing any initial fast tags.

Block 410 is performed if it is determined that the current edge controller is still not overloaded. At block 410, normal operation ensues, which includes processing the fast and slow tags, with slow tags being processed more slowly than fast tags. This can be implemented, for example, by placing read instructions for reading from slow tags on a slow queue (such as slow read queue 142 shown in FIG. 1B) and placing read instructions for reading from fast tags on a fast queue (such as fast read queue 144 shown in FIG. 1B), wherein the read instructions on the slow queue are processed more slowly than the read instructions on the fast queue. The method ends at block 490 for the current cycle and is repeated the next cycle.

Block 412 is performed if it is determined at blocks 404 or 408 that the current edge controller is overloaded. At block 412, a warning is raised to inform the user, and client read requests for data from slow tags are gradually dropped until the overload condition of the edge controller is determined to be sufficiently cleared. Dropping the client read requests means that processing the read request is postponed to a future processing cycle and the edge controller is not asked to deliver an update on the postponed tags for this cycle.

The gradual dropping can include gradually increasing the number of client read requests that are dropped. This can continue, if needed, until all client read requests for data from slow tags are dropped. Although a client read request was dropped for the current cycle, it can be delayed till a next or later cycle. In this way, client read requests may be never completely dropped.

When overloading continues to a point in which client read requests for slow tags are always dropped, the client read requests that were dropped can be processed at long configurable intervals, such as every 24 hours in order to ensure a minimum responsiveness for the overall communication even in case of a permanent overload condition of the edge controller 4.

The method continues at block 414, at which a determination is made whether the edge controller is still overloaded after all client read requests for data from slow tags have been dropped.

Block 416 is performed if the determination at block 414 is that the controller is not still overloaded. At block 416, the only client read requests for data from fast tags is processed. The user is informed that all other client read requests are being dropped. The method ends at block 490 for the current cycle and is repeated the next cycle.

Block 418 is performed if the determination at block 414 is that the controller is still overloaded. At block 418, a warning is raised to inform the user, and client read requests for data from fast tags are gradually dropped until the overload condition of the edge controller is determined to be sufficiently cleared or until all client read requests for data from fast tags are dropped. The method ends at block 490 for the current cycle and is repeated the next cycle.

Potential advantages of user configurable slow and fast designators to manage reading of data by read request module 122 include reduction of CPU load of edge controller(s) 4 and reduction of data transfers along interfaces 20 (which can have limited bandwidths). The ability to reduce CPU load before overloading occurs using slow and fast data transfers can avoid overloading conditions. The ability to recognize and react to potential or actual overloading conditions of edge controller(s) 4 can reduce impact on critical controllers and critical control loops, as well as on production. These measures allow mission control performed by edge controller(s) 4 to be prioritized over serving data to OPC UA server.

Potential advantages of using user configurable write enable designators to manage writing of data by write request module 124 include greater security when allowing OPC UA clients 10 to write to edge controller(s) 4 and/or data points in industrial equipment. In this way, large computing power of OPC UA clients 10 can be leveraged, e.g., for performing analytics on potentially large amounts of data, while reducing security risks of causing misconfigurations, whether malicious or not, by restricting writing to only write-enabled data points.

Potential advantages of user configurability of fast, slow, and write-enable designators via UI 120 include ease of customization with the possibility of modifying, at any time, including real time, management of read requests and write requests for data transfers. Such modifications can be made with minimal skill, from any remote or local location. Even when default values are relied upon, the potential advantages for safeguarding edge controllers are still attainable.

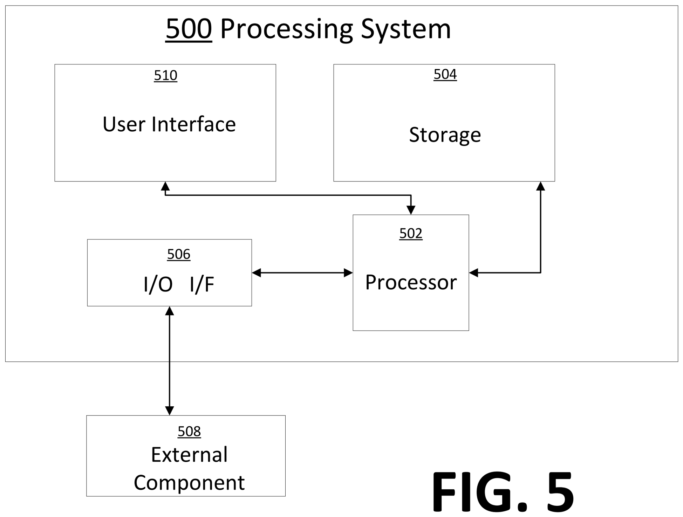

With reference to FIG. 5, a block diagram of an example computing system 500 is shown, which provides an example configuration for implementation of OPC UA server 8 shown in FIGS. 1A and 1B. Portions of OPC UA server 8 and its components could each be configured as software, firmware, or hardware, and computing system 500 could represent such portions. Computing system 500 is only one example of a suitable system and is not intended to suggest any limitation as to the scope of use or functionality of embodiments of the disclosure described herein.

Computing system 500 is shown in the form of a general-purpose computing device. Computing system 500 includes a processing device 502, memory 504, an input/output (I/O) interface (I/F) 506, and user interface 510, and can optionally communicate with an external component 508.

In embodiments, processing device 502 can include, for example, a programmable logic device (PLD), microprocessor, DSP, a microcontroller, an FPGA, an ASIC, and/or other discrete or integrated logic circuitry having similar processing capabilities.

In embodiments, processing device 502 and the memory 504 can be included in components provided in the FPGA, ASIC, microcontroller, or microprocessor, for example. Memory 504 can include, for example, volatile and non-volatile memory for storing data temporarily or long term, and for storing programmable instructions executable by the processing device 502. Memory 504 can be a removable (e.g., portable) memory for storage of program instructions. I/O I/F 506 can include an interface and/or conductors to couple to the one or more internal components and/or external components 508.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flow diagram and/or block diagram block or blocks.

The computer program instructions may also be loaded onto a computer, other programmable data processing apparatus, or other devices to cause a series of operational operations to be performed on the computer, other programmable apparatus or other devices to produce a computer implemented process such that the instructions which execute on the computer or other programmable apparatus provide processes for implementing the functions/acts specified in the block diagram block or blocks.

Embodiments of OPC UA server 8 may be implemented or executed by one or more computer systems, such as a microprocessor or a server. Each computer system 500 can be included within processing components of each of OPC UA server 8, or multiple instances thereof. The computer system 500 can be provided as an embedded device.

Computer system 500 is only one example of a suitable system and is not intended to suggest any limitation as to the scope of use or functionality of embodiments of the disclosure described herein. Regardless, computer system 500 is capable of being implemented and/or performing any of the functionality set forth hereinabove.

Computer system 500 may be described in the general context of computer system-executable instructions, such as program modules, being executed by a computer system. Generally, program modules may include routines, programs, objects, components, logic, data structures, and so on that perform particular tasks or implement particular abstract data types.

Aspects of computer system 500 may take the form of an entirely hardware embodiment, an entirely software embodiment (including firmware, resident software, microcode, etc.) or an embodiment combining software and hardware aspects that may all generally be referred to herein as a "circuit," "module" or "system." Furthermore, aspects may take the form of a computer program product embodied in one or more computer-readable medium(s) having computer-readable program code embodied thereon.

Any combination of one or more computer-readable medium(s) may be utilized. The computer-readable medium may be a non-transitory computer-readable medium. A non-transitory computer-readable medium may be, for example, but not limited to, an electronic, magnetic, optical, electromagnetic, infrared, or semiconductor system, apparatus, or device, or any suitable combination of the foregoing. More specific examples (a non-exhaustive list) of the non-transitory computer-readable medium can include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages. Moreover, such computer program code can execute using a single computer system or by multiple computer systems communicating with one another (e.g., using a local area network (LAN), wide area network (WAN), the Internet, etc.). While various features in the preceding are described with reference to flowchart illustrations and/or block diagrams, a person of ordinary skill in the art will understand that each block of the flowchart illustrations and/or block diagrams, as well as combinations of blocks in the flowchart illustrations and/or block diagrams, can be implemented by computer logic (e.g., computer program instructions, hardware logic, a combination of the two, etc.). Generally, computer program instructions may be provided to a processor(s) of a general-purpose computer, special-purpose computer, or other programmable data processing apparatus. Moreover, the execution of such computer program instructions using the processor(s) produces a machine that can carry out a function(s) or act(s) specified in the flowchart and/or block diagram block or blocks.

The flowchart and block diagrams in the Figures illustrate the architecture, functionality and/or operation of possible implementations of various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

It is to be understood that the above description is intended to be illustrative, and not restrictive. Many other implementation examples are apparent upon reading and understanding the above description. Although the disclosure describes specific examples, it is recognized that the systems and methods of the disclosure are not limited to the examples described herein, but may be practiced with modifications within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

It is understood that embodiments of the disclosure herein may be configured as a system, method, or combination thereof. Accordingly, embodiments of the present disclosure may be comprised of various means including hardware, software, firmware, or any combination thereof.

It is to be appreciated that the concepts, systems, circuits, and techniques sought to be protected herein are not limited to use in the example applications described herein (e.g., industrial applications), but rather may be useful in substantially any application where it is desired to receive decision support for each step in an automated fashion.

Having described various embodiments, which serve to illustrate various concepts, structures and techniques that are the subject of this patent, it will now become apparent to those of ordinary skill in the art that other embodiments incorporating these concepts, structures and techniques may be used. Additionally, elements of different embodiments described herein may be combined to form other embodiments not specifically set forth above.

## Claims

1. A method performed by an interface server for safeguarding one or more edge controllers coupled to industrial equipment during data transfers, the method comprising:
configuring (204) measures for data transfers between the external client and components of the one or more edge controllers, the one or more edge controllers and the industrial equipment being secured in a control zone established by an industrial network, the one or more external clients being external from the control zone;
receiving (206) a request for transferring data between an external client of one or more external clients and a component of an edge controller of the one or more edge controllers;
applying (208) the measures; and
facilitating (210) transfer of the data requested in accordance with the applied measures.

2. The method of claim 1, comprising:
receiving (202) user input; and
configuring (204) the measures based on the user input.

3. The method of claim 1 or claim 2, wherein configuring the measures includes associating fast and slow designators with respective selected data points of a plurality of data points that reference the components of the one or more edge controllers, wherein when transferring data with a component of the one or more edge controllers referenced by a slow designator, the measures are configured with a first configuration, and when transferring data with a component of the one or more edge controllers referenced by a data point having a fast designator, the measures are configured with a second configuration that is different from the first configuration.

4. The method of claim 3, wherein the first configuration causes transferring the data at a first rate based on a first time interval and the second configuration causes transferring the data at a second rate based on a second time interval that is shorter than the first time interval.

5. The method of any of claims 1 to 4, wherein configuring the measures includes associating a write-enabled designator with a set of data points of the plurality of data points, wherein the measures are configured to allow the data to be transferred by a write operation from the external client to only the components of the one or more edge controllers referenced by the set of data points.

6. The method of any of claims 1 to 5, comprising identifying potential or actual overloading conditions of an edge controller of the one or more edge controllers, wherein the measures are applied to data transfers with components of the edge controller in response to identification of the potential and/or actual overloading conditions.

7. The method of any of claims 1 to 6, comprising:
associating fast and slow designators with respective data points of a plurality of data points that reference the components of the one or more edge controllers; and
identifying potential or actual overloading conditions of an edge controller of the one or more edge controllers,
wherein when processing read requests to read the data from the components of the one or more edge controllers that are referenced by a data point associated with a slow designator, the measures apply a first configuration for effectively dropping data requested to be read for one or more read/write cycles responsive to identification of the potential or actual overloading condition, and wherein when processing a request to read data from the components of the one or more edge controllers that are referenced by a data point associated with a fast designator, the measures apply a second configuration that is different from the first configuration for potentially effectively dropping the data requested to be read responsive to identification of the potential or actual overloading condition.

8. The method of claim 7, wherein the first configuration includes gradually adjusting an amount of read requests from components of the one or more edge controllers referenced by a data point associated with a slow designator that are processed, wherein the amount is a function of resolution of the potential or actual overloading condition.

9. The method of claim 7 or claim 8, wherein the second configuration includes refraining from effectively dropping the data requested to read from components of the one or more edge controllers that are referenced by a data point associated with a fast designator or effectively dropping a smaller amount of data requested at any point of time than is effectively dropped in connection with read requests from components of the one or more edge controllers referenced by a data point associated with a slow designator.

10. The method of any of claims 1 to 9, wherein functionality of the one or more edge controllers is prioritized over performing the requested data transfer.

11. The method of any of claims 1 to 10, wherein a plurality of the one or more external clients are subscribed to the same data point, each of the subscribed external clients being subscribed at a respective subscribed rate, upon which the method includes polling a component of the edge controller referenced by the data point only once at a selected subscribed rate on behalf of all of the subscribed external clients and transferring data obtained from a component of the one or more edge controllers referenced by the data point to the plurality of the external clients.

12. The method of claim 11, wherein the selected subscribed rate is a fastest subscribed rate of the respective subscribed rates.

13. A computer system (500) for safeguarding one or more edge controllers coupled to industrial equipment during data transfers, the computer system (500) comprising:
a memory (504) configured to store instructions;
at least one processor (502) disposed in communication with said memory (504), wherein said at least one processor (502) upon execution of the instructions is configured to:
configure (204) measures for data transfers between the external client and components of the one or more edge controllers, the one or more edge controllers and the industrial equipment being secured in a control zone established by an industrial network, the one or more external clients being external from the control zone;
receive (206) a request for transferring data between an external client of one or more external clients and a component of an edge controller of the one or more edge controllers;
apply (208) the measures; and
facilitate (210) transfer of the data requested in accordance with the applied measures.

14. The computer system (500) of claim 13, wherein configuring the measures includes associating fast and slow designators with respective selected data points of a plurality of data points that reference the components of the one or more edge controllers, wherein when transferring data with a component of the one or more edge controllers referenced by a slow designator, the measures are configured with a first configuration, and when transferring data with a component of the one or more edge controllers referenced by a data point having a fast designator, the measures are configured with a second configuration that is different from the first configuration.

15. A computer program comprising instructions, which when executed by a computer system, cause the computer system to:
configure (204) measures for data transfers between an external client and components of one or more edge controllers coupled to industrial equipment, the one or more edge controllers and the industrial equipment being secured in a control zone established by an industrial network, the one or more external clients being external from the control zone;
receive (206) a request for transferring data between an external client of one or more external clients and a component of an edge controller of the one or more edge controllers;
apply (208) the measures; and
facilitate (210) transfer of the data requested in accordance with the applied measures.
